(19) Europäisches Patentamt
European Patent Office
Office européen des brevets

(11) **EP 3 624 421 B1**

(12) **EUROPEAN PATENT SPECIFICATION**

(45) Date of publication and mention
of the grant of the patent:
**10.01.2024 Bulletin 2024/02**

(21) Application number: **18382666.8**

(22) Date of filing: **16.09.2018**

(51) International Patent Classification (IPC):
**G06F 11/34** *(2006.01)* **G09B 5/00** *(2006.01)*
**G06F 11/30** *(2006.01)* **H04L 67/50** *(2022.01)*

(52) Cooperative Patent Classification (CPC):
**G06F 11/3438; G06F 11/3006; G06F 11/3452;
G09B 5/00; H04L 67/535**

(54) **METHOD FOR MONITORING ACTIVITIES PERFORMED BY USER GROUPS IN ONLINE DIGITAL ENVIRONMENTS**

VERFAHREN ZUR ÜBERWACHUNG VON AKTIVITÄTEN, DIE VON NUTZERGRUPPEN IN DIGITALEN ONLINE-UMGEBUNGEN AUSGEFÜHRT WERDEN

PROCÉDÉ DE SURVEILLANCE D'ACTIVITÉS EXÉCUTÉES PAR DES GROUPES D'UTILISATEURS DANS DES ENVIRONNEMENTS NUMÉRIQUES EN LIGNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.03.2020 Bulletin 2020/12**

(73) Proprietor: **Universidad Internacional de La Rioja (UNIR)
26006 Logroño (La Rioja) (ES)**

(72) Inventors:
• **Burgos Solans, Daniel
26006 Logroño (La Rioja) (ES)**
• **De la Fuente Valentín, Luis
26006 Logroño (La Rioja) (ES)**

(74) Representative: **TRBL Intellectual Property
Glorieta de Quevedo, 8
28015 Madrid (ES)**

(56) References cited:
**US-A1- 2014 122 595**

• **Abelardo Pardo ET AL: "A Visual Analytics Method for Score Estimation in Learning Courses LN4LD (learning Networks for Learning design" View project Scaling the Provision of Personalised Learning Support Actions to Large Student Cohorts View project", ArticleinJournal of Universal Computer Science ., 1 January 2015 (2015-01-01), XP055558650, Retrieved from the Internet:
URL:https://www.researchgate.net/profile/A belardo_Pardo/publication/273144408_A_Visu al_Analytics_Method_for_Score_Estimation_i n_Learning_Courses/links/54fa648a0cf23e66f 0318dc1/A-Visual-Analytics-Method-for-Scor e-Estimation-in-Learning-Courses.pdf [retrieved on 2019-02-19]**
• **DE-LA-FUENTE-VALENTIN LUIS ET AL: "A4Learning -- A Case Study to Improve the User Performance: Alumni Alike Activity Analytics to Self-Assess Personal Progress", 2014 IEEE 14TH INTERNATIONAL CONFERENCE ON ADVANCED LEARNING TECHNOLOGIES, IEEE, 7 July 2014 (2014-07-07), pages 360-362, XP032647094, DOI: 10.1109/ICALT.2014.107 [retrieved on 2014-09-17]**
• **Dr Luis, Luis De, La Fuente, Daniel Burgos, Logroño, La Rioja: "Am I doing well? A4Learning as a self-awareness tool to integrate in Learning Management Systems", Campus Virtuales, 1 June 2018 (2018-06-01), XP055558655, Retrieved from the Internet:
URL:http://uajournals.com/ojs/index.php/ca mpusvirtuales/article/view/48/47 [retrieved on 2019-02-19]**

EP 3 624 421 B1

**Description**

**FIELD OF THE INVENTION**

The present invention is comprised in the field of information technologies, and specifically in the field of communication networks for communication between users over the Internet (i.e., a decentralized set of interconnected communication networks using the TCP/IP protocol family for transmitting data between computers connected in server-client mode). More specifically, the invention relates to a system and method for evaluating and monitoring activities performed by user groups within digital platforms, such as social media, security applications, buying/selling over the Internet, and particularly in the context of online educational platforms.

**BACKGROUND OF THE INVENTION**

Tracking user activities is currently a necessity in most online digital platforms, regardless of the sector of application. As a result of a suitable evaluation of the actions of said users, it is possible to obtain valuable information about how they use the services that are offered, their satisfaction with the experience of using such services, or other metrics that allow improving both the functionalities offered to users and the actual activities of said users.

Within the field of learning technologies and education over the Internet, the information generated by the interactions taking place between the users (for example, the students) enables didactic and/or management actions that would be inconceivable without the support of said information. Therefore, the analysis of student behaviour in these platforms enables very precise tracking of their performance both on an individual (student) level and on a collective (classes, courses, or subjects) level.

Nevertheless, the same amount of information that can serve as a support and advantage for given processes can also be an added difficulty in others when said information is not suitably processed and segmented. In other words, an excess of available information, without a technical infrastructure that allows interpreting it, makes it difficult and costly to select what the useful data is and what can be discarded. In practice, this means that the information obtained from users by means of their use of online platforms must be segmented by means of search tools and/or filters, or through functionalities capable of extracting the relevant information by means of data mining, artificial intelligence techniques, or Big Data techniques.

In the educational sector, different applications have also been tested in the field of learning analytics which are based for the most part on different systems and methods of displaying the obtained information. Therefore, the data collected from users is presented in different graphical manners, so it is the teacher or the student who has to interpret the display, to thereby give a specific meaning to same. For example, the article by L. De La Fuente Valentin et al. "A visual analytics method for score estimation in learning courses", Journal of Universal Computer Science, 21 (1), p. 134-155, (2015) discloses a visualization technique based on similarity measures and their relationship with final course results, in order to foster the awareness of each student. This reference also refers to techniques for the final score estimation based on similarity measurements. The potential of this strategy, however, has not been developed sufficiently. Current information display systems in the field of learning analytics particularly focus on showing basic statistical indicators, such as, for example, the number of visits to a web resource (for example, a given educational module that is reviewed by the student). Furthermore, most of these systems focus on providing the teacher with tools for tracking the topics that are taught, whereas support for students has still not been sufficiently investigated in the mentioned systems.

The potential for technologies based on learning analytics is primarily based on offering relevant information to the student without said student having explicitly requested it. For example, some of the systems known in this field allow the student to compare his or her activity and grades with those of his or her classmates, which have previously been anonymised. This approach is based on the idea that students that display similar behavioural patterns would be graded similarly, which has been also reported in the article by L. De La Fuente Valentin et al. "A4Learning: a case study to improve the user performance: Alumni Alike Activity Analytics to Self-Assess Personal Progress", IEEE 14th International Conference on Advanced Learning Technologies, (2014). This document is targeted to the students, thus providing them with a tool to self-estimate their grade by comparing themselves to students from previous course editions. For instance, the similarity measurement is computed as a Euclidean distance, Pearson correlation or more preferably, Bray-Curtis similarity. Likewise, in order to understand a display, certain information must be known beforehand. Since the student is the only person who completely knows his or her learning context, only the student may give the display its true meaning. In turn, the teacher is also a fundamental part of the teaching/learning process who is in continuous contact with the students, so the teacher will also have a certain criterion for contextualizing and interpreting the visual information aimed at the student.

An example of a prototype of a learning management system is disclosed in the article by L. De La Fuente Valentin and D. Burgos "Am I doing well? A4Learning as a self-awareness tool to integrate in Learning Management Systems", Campus Virtuales, 3(1), p.32-40, (2015), which proposes tracking the student's activity in the shape of activity logs. Moreover, it analyses the information of the students, calculates similarity measurements, and represents them. Particularly, it offers a visual representation of the results as a widget for its integration in the learning system. Another e-learning platform is anticipated in disclosed in patent application US 2014/0122595 A1, which is based on creating and updating the content provided to the students, considering meta data obtained from semantic analysis and electronic social media interactions among users and between users and content.

Even though known learning analytics systems provide valid tools for obtaining statistical information about the utilization of the online content by students, said systems still has certain limitations that remain unsolved in the state of the art. Said limitations fundamentally relate to the capacity of tracking periodic actions in different user groups, as occurs for example in the evaluation of different classes of students registered in one and the same subject. Even though there are tools that allow evaluating groups of students in an individual manner, it would be desirable to have in the present technical field tools that allowed extracting information that links some user groups with others when they are given the same task or study the same topics.

In this sense, the main technical problem to which the present invention relates is to provide web platforms that have a plurality of users, and generally any web content manager (or CMS, content management system) where users perform multiple activities, with technical means for analyzing said activities by means of monitoring and comparing them, user by user. The invention thereby provides similarity results and metrics between said users that allow distinguishing, for example, the behaviours considered to be correct from those behaviours considered to be incorrect, or even fraudulent.

Likewise, the invention allows solving the additional problem of analyzing user behaviour patterns by integrating the information of multiple web services, said services being both proprietary (for example a CMS) and belonging to third parties (such as forums, blogs, messaging, or social media), where said web services are hosted in a plurality of servers with different unshared proprietary permissions (i.e., where the mentioned web services and their corresponding servers are the property of different entities that do not openly share access thereto). The activity of the users can thereby be globally followed, obtaining information with a high degree of detail. Again, from the technical viewpoint it is very necessary to have systems and methods of this type for evaluating activities, since it is very common in any type of CMS for fraudulent uses thereof to occur, and even for cyber attacks referred to as "brute force" attacks to occur, which consist of generating a large number (usually tens or hundreds of thousands) of automated actions in the CMS to find or exploit design weaknesses. In view of this situation, finding technical means that allow identifying behaviours of this type is absolutely necessary today in order to assure the rights of users, especially when almost all CMSs have personal information that may be more or less sensitive (protected personal data, banking or financial information, health information, etc.).

Generally, and in view of the foregoing, systems integrating web services hosted in servers with unshared proprietary permissions are limited in terms of their capacity to follow the activities of their users in a global manner. Therefore, when said users access the different web services of the system in client mode, it is not possible to analyze their behaviour in a combined manner due to the existence of the mentioned permissions proprietary. Therefore, it is desirable to have technical solutions that provide means of monitoring users who can access all the web services integrated in a networked system, but without affecting the assignment of permissions of each of said services. This therefore entails a significant advantage as regards the data integrity for each service involved and for the security of the exchanged information and access to same.

Based on what has been disclosed in the state of the art, the authors of the present invention are unaware of the existence of systems or methods that allow evaluating the activities of users in digital environments in the manner herein claimed. The invention therefore allows overcoming the limitations of known systems, where it is not possible to analyze behaviour patterns when there are proprietary and non-proprietary web services.

The present invention therefore seeks to solve the mentioned limitation by means of a novel system and method for evaluating activities performed by user groups in online digital environments, which allows obtaining information about the performance of said activities, by means of establishing different comparison metrics between the users of said groups.

As mentioned, the present invention preferably applies in the field of education. Nevertheless, the proposed system and method can likewise be applied, without limitation, to other sectors such as that of companies with groups of employees, groups of clients, evaluation of public services, private messaging, advertising services, and generally to any field where it is necessary to analyze the performance of tasks or activities between users of different groups when they have to do them.

## BRIEF DESCRIPTION OF THE INVENTION

A primary object of the present invention is therefore to provide a technical solution that allows comparing the activities of a tracking group (for example, a group of students in the field of education) with the activity of students from previous editions of one and the same activity (for example, previous students of the same subject). By means of said comparison, the invention allows extracting certain information which, when visually presented, can be useful for teachers to know the development and utilization of the subject at different moments in time.

In this sense, the system of the invention offers support to students by means of presenting a visual relationship of the achievements and results of students from previous years, according to their activity pattern in the learning environment. The objective of the system is to therefore increase the level of knowledge that the student has concerning his or her own academic situation in the course, thereby enhancing his or her own personal reflection on his or her progress as a means to improve performance and learning results. At the same time, the invention provides an integrated display of the subject which allows the teacher and/or tutor to know the progress of the class and to be able to make the right decisions for better progression of their students. It is therefore a system that supports the student and the academic world in search of a common objective.

The invention therefore faces two main objects. On one hand, it relates to the search for artificial intelligence and data mining techniques capable of extracting the information necessary for establishing a visual relationship between activity in the course and academic performance. On the other hand, it relates to a design and improvement of a visual proposal that allows transmitting the idea to the end user without distracting him or her from his or her main tasks in the course, while at the same time providing useful supporting information.

The mentioned objects of the invention are preferably achieved by means of a system for evaluating activities performed by user groups in online digital environments, comprising one or more computing means configured by means of hardware and software for hosting web services, wherein said web services comprise at least:

- One content manager system (or CMS) configured with different activities that can be performed by the users, and with one or more recording means for recording activity records and/or results associated with the performance of activities performed by said users.
- One user evaluation web platform.
- One or more web communication means for communicating with web services acting as secondary data sources (the expressions "secondary data sources" and "secondary web services" will be used interchangeably throughout the present document), configured for recording secondary user activity records.

Advantageously, the evaluation web platform of the system is configured with:

- A calculation module configured for calculating the similarity of the activity records of the CMS and of the secondary data sources, evaluated between two or more users of the system, and associating said similarity with the result obtained in the performance of said activities.
- A display module configured for reading the calculated similarity information, the activity records, and the results obtained by the users, and showing graphical representations of said information.

The system of the invention therefore constitutes a tool fundamentally designed for teachers and potentially for students of educational courses that are taught periodically and in which the activity of the student leaves an electronic trace that can be monitored. The tool establishes the similarity between the traces of students who are studying the course with respect to the traces of students who studied the same course in the past. So a student in the current year will have N similarity values associated with him or her, one for each of the N students who studied the same course in previous editions (not necessarily the immediately preceding edition).

For each student, said similarity values are clustered according to the final grade obtained by the student in previous years with which said similarity corresponds, and a colour code-based display, for example, is established with the average similarity values.

An object of the invention relates to a method for monitoring activities performed by groups of users in online digital environments, according to independent claim 1. Further embodiments of the method are provided in dependent claims 2-6.

## DESCRIPTION OF THE DRAWINGS

Figure 1 shows an illustrative and non-limiting diagram of the primary elements of the system of the invention in a preferred embodiment thereof.

Figure 2 shows an illustrative and non-limiting first visual representation of the calculations performed with the system and the method of the invention.

Figure 3 shows an illustrative and non-limiting second visual representation of the calculations performed with the system and the method of the invention.

## REFERENCE NUMBERS USED IN THE DRAWINGS

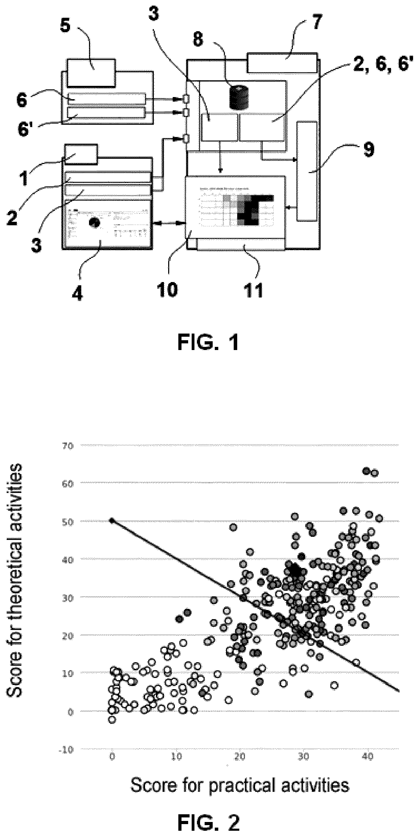

For the purpose of helping to better understand the technical features of the invention, Figure 1 is accompanied by a series of reference numbers in which the following has been depicted with an illustrative and non-limiting character:

| | |
|---|---|
| (1) | Content management module, CMS, LMS |
| (2) | User activity records |
| (3) | User activity results |
| (4) | Content management module user interfaces |
| (5) | Secondary data sources |
| (6, 6') | Secondary activity records |
| (7) | User evaluation web platform |
| (8) | Database |
| (9) | Calculation module |
| (10) | Display module |
| (11) | Evaluation web platform user interface |

## DETAILED DESCRIPTION OF THE INVENTION

A detailed description of the invention relating to a preferred embodiment thereof shown in Figure 1 is provided below. As shown in said figure, the invention preferably comprises a content management module (1) (or CMS, or LMS in educational applications for Learning Management System), preferably conceived as one or more web services configured for providing the primary data source to the activity evaluation system. In educational applications, said CMS (1) will comprise different activities that can be performed by students, such as for example, exercises, activities, content review, skill tests, etc. By performing the mentioned activities, the CMS (1) will generate a plurality of activity records (2) and/or results (3) associated with said activity, for example, according to the performance of the students. Additionally, the CMS (1) will preferably be configured with one or more user interfaces (4), configured with the content and information to be shown to the students whether for informative, educational, tracking, or evaluation purposes.

Although there is a direct relationship between the activity of a student in the CMS (1) and his or her achievements obtained, the capacity of educational platforms is generally limited in relation to capturing all the activity of the student. In fact, a large part of the educational and learning activity of the student takes place outside of said CMS (1), so if the analysis is limited to said CMS (1) information that may possibly be very valuable may be discarded. For example, a number of studies highlight the value of social media in learning and the predictive value of the traces generated in said media.

For the purpose of increasing independence with respect to the CMS (1), the system of the invention is additionally configured as a tool capable of being integrated with other web services, as shown in Figure 1. The system can therefore use one or more secondary data sources (interchangeably referred to as secondary web services) (5) which will also constitute the input information to be evaluated by means of one or more secondary activity records (6, 6'). For example, it is possible to implement an integration module through application programming interfaces (APIs), capturing data from social media, such as Twitter, or to integrate information from questionnaires conducted with tools such as Google Forms or SurveyMonkey.

The system thereby essentially proposes an evaluation web platform (7) that can be integrated with the CMS (1) and with the different secondary data sources (5) to capture the activity of the student and analyze it. Therefore, said evaluation web platform (7) is configured with one or more web services for calculating the similarity between the data obtained by a group of students and the data obtained by other similar groups (for example, with the data of students from previous editions of a given academic unit or subject). The evaluation web platform (7) likewise allows visually showing a relationship between students with similar behaviour and their achievements.

The web-based implementation of the evaluation platform (7) allows the integration thereof in heterogeneous learning environments, such as cloud applications or other work contexts. In other words, the system of the invention allows analyzing the input data of any existing CMS (1) or any learning platform. In this sense, the evaluation web platform (7) is preferably configured with a database (8) for storing and transforming the information corresponding to the activity records (2, 6, 6') or to the results (3) of the students.

The evaluation web platform (7) is likewise configured with a calculation module (9) which allows reading the activity records (2, 6, 6') and calculating the similarity between the students from different groups. Said processing is preferably performed periodically, so the display thereof will be updated with each new piece of information received. The update frequency can be adjusted (for example once a day) for the adaptation thereof to the needs of different educational scenarios.

On the other hand, the evaluation web platform (7) is equipped with a display module (10) configured for reading the activity records (2, 6, 6') and/or results (3) of the groups of students, creating different visual representations with the similarity information. The displays that are produced can also be used to feed the user interfaces (4) of the CMS (for example, through one or more widgets). The obtained results and their corresponding displays can therefore be consulted in different formats both by the teachers or tutors (through web access to the display module (10), by means of one or more interfaces (11) configured in the evaluation web platform (7)), and by students through CMS (1) itself.

The described system additionally comprises one or more computing means configured by means of hardware and software for hosting the web services corresponding to the CMS (1) and to the evaluation web platform (7), as well as one or more communication means for communicating (for example over the Internet) with the different secondary data sources (5) used.

Having described the primary elements of the system of the invention, the steps implemented by the method of evaluation carried out by said system will be described below. As mentioned, the display technique proposed by the invention is essentially based on the concept of "similarity" between the behaviours of user groups (for example, student classes). The reason for this approach is that users tend to have a better notion of their performance when comparing it to other users performing the same activities (for example, students participating in one and the same course, or students who have participated in previous editions). A suitable display allows the students to more readily interpret the similarity information, instead of receiving a single numerical value that summarizes the evaluations performed up to that point.

The technical implementation of this method thereby allows identifying those tasks or activities in the field of education that are performed by students with better results. This will provide teachers and tutors with new tools that they can use to motivate students or recommend to them how to perform given activities. For example, if a teacher says that "this exercise is not mandatory, but statistics show that the students who did it in previous years got the best overall results in the course," it can be expected that the students who want the highest scores will try to complete the mentioned exercise. In other words, the system encourages students to try to be "similar" to the best students in previous years. Using the same idea, the display that is presented identifies similar students from previous years and reports the results they achieved.

In a preferred embodiment of the invention, the set of records (2, 6, 6') and results (3) created by tracking the activities of the groups of students is derived from a set of files on record obtained from the CMS (1) and the secondary data sources (5), where each line preferably represents an event produced by a person at a given time (for example, participation of User 1 in a web forum of the CMS (1), User 2 posting a tweet in Twitter with respect to the topic being studied, etc.).

To perform a similarity measurement with respect to the activities of the users, the initial data must be translated into vectors suitable for being mathematically processed. This is done by counting the number of events of a given type produced by a user (for example, the number of times a user has participated in a forum). The process is repeated for each event/student, resulting in a matrix like the one shown in Table 1. In the matrix, each row represents a different student, and the columns represent different types of events. As such, each cell contains the number of times a given student has produced a certain type of event.

Table 1: Number of activities performed by user and type of activity.

|  | Activity 1 | Activity 2 | Activity 3 |
|---|---|---|---|
| User 1 | 2 | 3 | 0 |
| User 2 | 1 | 2 | 0 |
| User 3 | 1 | 1 | 2 |

With the data of the students in table format and with each row representing a student as a vector, the next step is to calculate the similarity between two vectors. To that end, the Bray-Curtis similarity metric [Bray & Curtis, 1957], originally proposed in ecological studies to quantify the difference between two samples of ecological abundance taken in different places, will preferably be applied.

Formally, for the similarity between two students (i e i '), with the number of events of the student i and the type j denoted by $n_{ij}$, and the totals (the sum of the row of values) as $n_{i+}$, the Bray-Curtis similarity is determined by Equation 1 below:

$$b_{ii'} = 1 - \frac{\sum_{j=1}^{N}|n_{ij} - n_{i'j}|}{n_{i+} + n_{i'+}}$$

. (Equation 1)

A technical advantage of this method is that the output values are within the range of 0 to 1. A value of 0 means 'completely discrete samples,' whereas 1 means 'identical samples'. Therefore, the result is a symmetrical matrix where cell i,i' contains the similarity between students i and i'. An example is provided in Table 2:

**Table 2:** Bray-Curtis similarities for the sample data.

|  | User 1 | User 2 | User 3 |
|---|---|---|---|
| User 1 | 0 | 0.75 | 0.44 |
| User 2 | 0.75 | 0 | 0.57 |
| User 3 | 0.44 | 0.57 | 0 |

Even though the Bray-Curtis similarity metric is particularly suitable for representing comparisons between user groups, other metrics such as Euclidean distance, squared Euclidean distance, Pearson correlation coefficient, Spearman's rank correlation coefficient, etc., can also be used in the scope of the invention.

Optionally, the analysis performed by the calculation module (9) of the system comprises establishing a value for each student/subject which determines the confidence of the system in the estimation that is performed. If the value is high, the system asserts that the estimated result will be produced with little margin of error. If the value is low, the system warns that the margin of error can be high. To calculate this confidence value in the estimations, a numerical value between 0 and 1 which quantifies the reliability of the information presented to the user, in which 0 indicates the lowest reliability and 1 indicates the highest reliability, is established.

For display purposes, the confidence value in the estimations is used for filtering the students presented on the screen. So by way of example, the user can choose to show on the screen only those students for whom the reliability of the estimation is high. Three possible values, for example, are allowed: low, medium, and high. This categorical classification is a mere translation of the numerical value, the purpose of which is to facilitate tool usability.

In different embodiments of the invention, the system contemplates different methods for calculating this confidence value in the estimations, with the following being examples:

- Method 1: With 'S' being the similarity value in the range in which the value thereof is higher, confidence in the estimation (C) is directly C=S.

- Method 2: With 'S' being the similarity value in the range in which the value thereof is higher, and with 'SumS' being the sum of the similarity values in all the ranges considered, confidence in the estimation is the quotient C=S/SumS.

- Method 3: With 'P' being the number of students from previous courses in a given grade range the similarity of which is above a threshold, and with 'N' being the total number of students from previous courses, confidence in the estimation is determined by the quotient C=P/N.

- Method 4: With 'P' being the number of students from previous courses in a given grade range the similarity of which is above a threshold, and with 'N' being the total number of students from previous courses exceeding the threshold similarity value in all the ranges considered, confidence in the estimation is determined by the quotient C=P/N.

Likewise, in additional embodiments of the invention, the obtained similarity results can comprise one or more clustering levels, for example, including multiple courses, classes, or subgroups thereof. In other embodiments of the invention, it is also possible to calculate and store several evaluation metrics, such that the user can select different displays generated by different graphics associated with said metrics.

In another preferred embodiment of the invention, in addition to the mean value of the similarities with students in said range, the similarity calculation also takes into account the number of users or students the similarity of which exceeds a given threshold. This threshold is preferably a parameter that can be configured by the user.

Therefore, the use of a parameter 'M' in which not only is the similarity value taken into account but it is also calculated as a weighted mean between 'S' and 'P,' can be considered as an alternative or complement to the use of similarity 'S'.

After the calculation module (9) has calculated the similarity values, and possibly the confidence values, the invention is based on obtaining student results distributions, which will be represented as scatter plots, for example, by the display module (10) (see Figure 2), with each dot representing a different student. This two-dimensional approach allows the easy visual recognition of user groups and based on the supposition that that the students participate in two types of evaluated activities (practical activities and theoretical activities in the presented case), this approach allows the identification of the horizontal and vertical axes with these two types of activity, thereby facilitating the calculation of a given score of the student. It is also possible to apply other different user activity classifications.

In the case presented in Figure 2, the position of a student in the graph is as follows:

- The horizontal axis represents the score of the student for practical activities (for example, tasks, exercises, and/or practical sessions).
- The vertical axis represents the score of the student for theoretical activities (for example, mid-term or final exams).
- The position of the evaluated student that is used as a reference for the representation of similarities is represented with a diamond in the graph.

The similarity with other students is represented with different colour intensities, and the real value depends on the student used for the comparison (for example, student A can be similar to student B, but different from student C). In other words, the graphical representation of such similarity will be different for each student in the course. When the graph is presented to a student, the student is used as a reference (dot with a diamond shape), and the colour intensities of the rest of the dots are accordingly applied: the darker the colour, the more similar the student. When they are presented to a different student, the similarity measurements will offer different values, and the graph will therefore be redone with the dots in the same position, but with different intensities. In other words, for the purpose of this work, the term "reference student" is used to mean "the student for whom the graph is calculated."

It should be pointed out that the colour intensities are obtained from the behaviour similarity measurements, whereas the position of the student in the graph is determined by his or her own score. Strictly speaking, these are two independent variables and there is no need to find a relationship between colour intensities and position. However, it is foreseeable that students with similar behaviours may also obtain similar scores, and this suggests that similar students must be located close to one another in the graph. The oblique solid line represented in Figure 2 is the pass/fail threshold for the course: students above the line will have passed the course.

The graphs shown in Figure 2 are based on complete knowledge of the entire evaluation of a student during a course, for example, according to the results obtained at the end of the semester. However, in another preferred embodiment of the invention, it is possible to obtain similarity values by means of comparing the behaviours of students in the current year with that of students from editions in previous years. In other words, if two editions of a course follow the same learning flow, the reference student is compared and analyzed in relation to a data set pertaining to a group of students that have already taken the course. The student will thereby be capable of knowing how similar students behaved in previous years, and such information will increase his or her perspective with respect to the user group, improving his or her performance during the course.

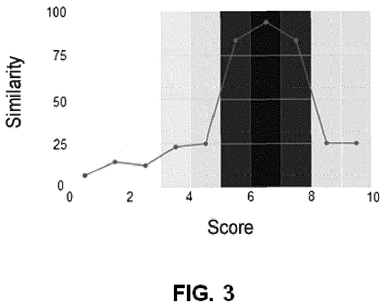

In another preferred embodiment of the invention, it is also possible to represent the evaluation of the student by means of a simplified graph like the one shown in Figure 3 of the present document. Said figure clusters the students from previous editions into different bands according to the final grade they obtained. For each group, the mean similarity is calculated and represented redundantly: first by means of the colour intensity of each band; second and/or by means of a linear graph (both options are represented in the figure). As can be seen, this display represents the similarity result of the student evaluated with respect to the rest of the students from one or more groups compared to the result obtained by said students on a scale of 0 to 10. It can thereby be seen how the student of said figure would have a higher similarity with the students who, on average, obtained a result of 6.5 out of 10.

**Claims**

1. Method for monitoring activities performed by groups of users in online digital environments, comprising the use of one or more servers integrated in a communication network connected to the Internet, with said servers being intended for hosting one or more web services, and wherein said web services comprise at least:

    - one content manager system, CMS (1), configured with activities that can be performed by the users through one or more client computers, remotely connected by means of TCP/IP protocol to the servers, through the communication network;

- one or more third-party secondary web services (5) connected to said CMS (1) over the Internet, and configured with activities that can be performed by the users outside of the CMS (1) through one or more client computers, remotely connected by means of TCP/IP protocol to the servers, through the communication network;

wherein the CMS (1) is configured with a database (8) for recording:

- at least one main user activity record (2) associated with activities that are performed by said users in the CMS (1), and
- at least one or more secondary user activity records (6, 6') associated with activities that are performed by users outside the CMS (1) through said third-party secondary web services (5);

wherein the third-party secondary web services are the property of different entities that do not openly share access thereto and wherein the performance of the activities is recorded as a set of score values;

- a user evaluation web platform (7), communicated with the CMS (1) and with the different third-party secondary web services (5), and equipped with one or more web services for recording and vectorising the activity of the users in said CMS (1) and in said third-party secondary web services (5), through one or more APIs communicating the CMS (1) with the mentioned third-party secondary web services (5) by means of TCP/IP protocol; and
- a calculation module (9) configured for performing mathematical operations on the user activity records (2, 6, 6') of the CMS (1) and of the third-party secondary web services (5) captured by the evaluation web platform (7), for two or more users of the CMS (1); said method comprising performing at least the following steps:

- transferring the set of user activity records (2, 6, 6') associated with the activities of the users from the CMS (1) and the third-party secondary web services (5) through a connection to the communication network by means of TCP/IP protocol to the evaluation web platform (7), associating at least one user activity record (2, 6, 6') with a user;
- processing in the server hosting the CMS (1) the information transferred to the evaluation web platform (7), vectorising and counting the number of activities of a given type performed by a user;
- the calculation module (9) processing, in the server hosting the CMS (1), the information obtained in the preceding step, calculating the similarity between at least two of the obtained vectors being calculated, wherein the similarity calculation comprises applying a Bray-Curtis metric to a user i and a user i' on a number N of activities, according to the following formula:

$$b_{ii'} = 1 - \frac{\sum_{j=1}^{N} |n_{ij} - n_{i'j}|}{n_{i+} + n_{i'+}}$$

where $n_{ij}$ is the number of times the user i performs an activity j, and where $n_{i+}$ is the total number of activities performed by said user i, and calculating the number of users whose similarity exceeds a given similarity threshold value;
- recording the similarity values obtained in the preceding step in the database (8), said values being associated with the main user activity record (2) generated in the CMS (1) and with the at least one or more secondary user activity records (6, 6') generated in the third-party secondary web services (5) and
- transmitting the information recorded in the preceding step through the communication network to one or more client computers by means of TCP/IP protocol, the calculated similarity information and the user activity records (2, 6, 6') obtained by the users in their activities being sent to a display module (10) of said client computers, said display module (10) being configured with one or more user interfaces (4, 11).

2. Method according to the preceding claim, wherein the similarity calculation additionally comprises applying one or more of the following metrics: Euclidean distance, squared Euclidean distance, Pearson correlation coefficient, Spearman's rank correlation coefficient.

3. Method according to any of claims 1 to 2, wherein the operations performed by the calculation module (9) of the system comprise establishing a value for each user which determines the confidence of the system in the estimation that is performed, wherein said confidence value is calculated according to one or more of the following methods:

a) with 'S' being the similarity value in the range in which the value thereof is higher, confidence in the estimation (C) is directly C=S;

b) with 'S' being the similarity value in the range in which the value thereof is higher, and with 'SumS' being the sum of the similarity values in all the ranges considered, confidence in the estimation is the quotient C=S/SumS;

c) with 'P' being the number of students from previous courses in a given grade range the similarity of which is above a threshold, and with 'N' being the total number of students from previous courses, confidence in the estimation is determined by the quotient C=P/N;

d) with 'P' being the number of students from previous courses in a given grade range the similarity of which is above a threshold, and with 'N' being the total number of students from previous courses exceeding the threshold similarity value in all the ranges considered, confidence in the estimation is determined by the quotient C=P/N.

4. Method according to any of claims 1 to 3, wherein the similarity results obtained comprise one or more user clustering levels and/or calculating and storing two or more evaluation metrics, such that the user can select different displays generated by different graphics associated with said metrics.

5. Method according to any of claims 1 to 4, wherein the similarity calculation performed by the calculation module (9) additionally comprises calculating the number of users the similarity of which exceeds a given threshold value.

6. Method according to any of claims 1 to 5, further comprising the steps of:

- displaying for each user, in the display module (10), a scatter plot with the score values associated with the performance of activities in the CMS (1) and the similarity value; and
- setting a pass/fail threshold in the scatter plot.

## Patentansprüche

1. Verfahren zum Überwachen von Aktivitäten, die von Nutzergruppen in digitalen Online-Umgebungen durchgeführt werden, umfassend die Verwendung von einem oder mehreren Servern, die in ein mit dem Internet verbundenes Kommunikationsnetz integriert sind, wobei die Server zum Hosting von einem oder mehreren Webdiensten bestimmt sind, und wobei die Webdienste mindestens Folgendes umfassen:

- ein Inhaltsmanagementsystem, CMS (1), das mit Aktivitäten ausgebildet ist, die von den Nutzern über einen oder mehrere Client-Rechner durchgeführt werden können, die über das Kommunikationsnetz mittels des TCP/IP-Protokolls aus der Ferne mit den Servern verbunden sind;
- einen oder mehrere sekundäre Webdienste (5) von Drittanbietern, die über das Internet mit dem CMS (1) verbunden sind und mit Aktivitäten ausgebildet sind, die von den Nutzern außerhalb des CMS (1) über einen oder mehrere Client-Rechner durchgeführt werden können, die über das Kommunikationsnetz mittels des TCP/IP-Protokolls aus der Ferne mit den Servern verbunden sind;
wobei das CMS (1) mit einer Datenbank (8) zum Aufzeichnen von Folgendem ausgebildet ist:

- mindestens einer Hauptnutzeraktivitätsaufzeichnung (2), die mit Aktivitäten assoziiert ist, die von den Nutzern im CMS (1) durchgeführt werden, und
- mindestens einen oder mehrere Sekundärnutzeraktivitätsaufzeichnungen (6, 6'), die mit Aktivitäten assoziiert sind, die von Nutzern außerhalb des CMS (1) über die sekundären Webdienste (5) von Drittanbietern durchgeführt werden;

wobei die sekundären Webdienste von Drittanbietern Eigentum verschiedener Entitäten sind, die den Zugang dazu nicht offen teilen, und
wobei die Durchführung der Aktivitäten als ein Satz von Punktwerten aufgezeichnet wird;

- eine Nutzerbewertungs-Webplattform (7), die mit dem CMS (1) und mit den verschiedenen sekundären Webdiensten (5) von Drittanbietern kommuniziert und mit einem oder mehreren Webdiensten zum Aufzeichnen und Vektorisieren der Aktivität der Nutzer in dem CMS (1) und in den sekundären Webdiensten (5) von Drittanbietern ausgestattet ist, über eine oder mehrere Programmierschnittstellen, die das CMS (1) mit den sekundären Webdiensten (5) von Drittanbietern mittels eines TCP/IP-Protokolls kommunizieren; und
- ein Berechnungsmodul (9), das ausgebildet ist, um mathematische Operationen an den Nutzeraktivitätsaufzeichnungen (2, 6, 6') des CMS (1) und der sekundären Webdienste (5) von Drittanbietern, die von der Bewertungs-Webplattform (7) erfasst wurden, für zwei oder mehr Nutzer des CMS (1) durchzuführen;

wobei das Verfahren das Durchführen mindestens der folgenden Schritte umfasst:

- Übertragen des Satzes von Nutzeraktivitätsaufzeichnungen (2, 6, 6'), die mit den Aktivitäten der Nutzer aus dem CMS (1) und den sekundären Webdiensten (5) von Drittanbietern verbunden sind, über eine Verbindung mit dem Kommunikationsnetzwerk mittels des TCP/IP-Protokolls an die Bewertungs-Webplattform (7), wobei mindestens eine Nutzeraktivitätsaufzeichnung (2, 6, 6') mit einem Nutzer assoziiert wird;
- Verarbeitung der an die Bewertungs-Webplattform (7) übertragenen Informationen im Server, der das CMS (1) hostet, wobei die Anzahl der von einem Nutzer durchgeführten Aktivitäten eines bestimmten Typs vektorisiert und gezählt wird;
- Verarbeitung der im vorhergehenden Schritt erhaltenen Informationen durch das Berechnungsmodul (9) im Server, der das CMS (1) hostet, wobei die Ähnlichkeit zwischen mindestens zwei der erhaltenen Vektoren berechnet wird, wobei die Berechnung der Ähnlichkeit die Anwendung einer Bray-Curtis-Metrik auf einen Nutzer i und einen Nutzer i' auf eine Anzahl N von Aktivitäten gemäß der folgenden Formel umfasst:

$$b_{ii'} = 1 - \frac{\sum_{j=1}^{N} |n_{ij} - n_{i'j}|}{n_{i+} + n_{i'+}}$$

wobei $n_{ij}$ die Anzahl der Male ist, die der Nutzer i eine Aktivität j durchführt, und

wobei $n_{i+}$ die Gesamtzahl der von dem Nutzer i durchgeführten Aktivitäten ist, und wobei die Anzahl der Nutzer berechnet wird, deren Ähnlichkeit einen gegebenen Ähnlichkeitsschwellenwert überschreitet;

- Aufzeichnen der im vorhergehenden Schritt erhaltenen Ähnlichkeitswerte in der Datenbank (8), wobei die Werte mit der im CMS (1) erzeugten Hauptnutzeraktivitätsaufzeichnung (2) und mit der mindestens einer oder mehreren in den sekundären Webdiensten (5) von Drittanbietern erzeugten Sekundärnutzeraktivitätsaufzeichnungen (6, 6') assoziiert sind; und
- Senden der im vorhergehenden Schritt aufgezeichneten Informationen über das Kommunikationsnetz zu einem oder mehreren Client-Rechnern mittels des TCP/IP-Protokolls, wobei die berechneten Ähnlichkeitsinformationen und die von den Nutzern bei ihren Aktivitäten erhaltenen Nutzeraktivitätsaufzeichnungen (2, 6, 6') an ein Anzeigemodul (10) der Client-Rechner gesendet werden, wobei das Anzeigemodul (10) mit einer oder mehreren Nutzerschnittstellen (4, 11) ausgebildet ist.

2. Verfahren nach dem vorhergehenden Anspruch, wobei die Ähnlichkeitsberechnung zusätzlich das Anwenden einer oder mehrerer der folgenden Metriken umfasst: Euklidischer Abstand, quadratischer euklidischer Abstand, Korrelationskoeffizient nach Pearson, Rangordnungs-Korrelationskoeffizient von Spearman.

3. Verfahren nach einem der Ansprüche 1 bis 2, wobei die von dem Berechnungsmodul (9) des Systems durchgeführten Operationen das Etablieren eines Wertes für jeden Nutzer umfassen, der die Konfidenz des Systems in der durchgeführten Schätzung bestimmt, wobei der Konfidenzwert nach einem oder mehreren der folgenden Verfahren berechnet wird:

a) wenn 'S' der Ähnlichkeitswert in dem Bereich ist, in dem der Wert davon höher ist, ist die Konfidenz in der Schätzung (C) direkt C=S;
b) wenn 'S' der Ähnlichkeitswert in dem Bereich ist, in dem der Wert davon höher ist, und wenn 'SumS' die Summe der Ähnlichkeitswerte in allen betrachteten Bereichen ist, ist die Konfidenz in der Schätzung der Quotient C=S/SumS;
c) wenn 'P' die Anzahl der Studenten aus vorherigen Kursen in einem bestimmten Notenbereich ist, deren Ähnlichkeit über einem Schwellenwert liegt, und wenn 'N' die Gesamtzahl der Studenten aus vorherigen Kursen ist, wird die Konfidenz der Schätzung durch den Quotienten C=P/N bestimmt;
d) wenn 'P' die Anzahl der Studenten aus vorherigen Kursen in einem bestimmten Notenbereich ist, deren Ähnlichkeit über einem Schwellenwert liegt, und wenn 'N' die Gesamtzahl der Studenten aus vorherigen Kursen ist, die den Schwellenwert für die Ähnlichkeit in allen betrachteten Bereichen überschreiten, wird die Konfidenz der Schätzung durch den Quotienten C=P/N bestimmt.

4. Verfahren nach einem der Ansprüche 1 bis 3, wobei die erhaltenen Ähnlichkeitsergebnisse eine oder mehrere Nutzer-Clusterebenen und/oder die Berechnung und Speicherung von zwei oder mehr Bewertungsmetriken umfassen, so dass der Nutzer verschiedene Anzeigen auswählen kann, die von verschiedenen, mit den Metriken assoziierten Grafiken erzeugt werden.

5. Verfahren nach einem der Ansprüche 1 bis 4, wobei die vom Berechnungsmodul (9) durchgeführte Ähnlichkeitsberechnung zusätzlich die Berechnung der Anzahl der Nutzer umfasst, deren Ähnlichkeit einen bestimmten Schwellenwert überschreitet.

6. Verfahren nach einem der Ansprüche 1 bis 5, das ferner die folgenden Schritte umfasst:

   - Anzeigen eines Streudiagramms für jeden Nutzer im Anzeigemodul (10) mit den Punktwerten, die mit der Durchführung von Aktivitäten im CMS (1) assoziiert sind, und dem Ähnlichkeitswert; und
   - Festlegen eines bestanden/nicht bestanden-Schwellenwerts in dem Streudiagramm.

## Revendications

1. Procédé de surveillance des activités exécutées par des groupes d'utilisateurs dans des environnements numériques en ligne, comprenant l'utilisation d'un ou de plusieurs serveurs intégrés dans un réseau de communication connecté à Internet, lesdits serveurs étant destinés à héberger un ou plusieurs services web, et dans lequel lesdits services web comprennent au moins :

   - un système de gestionnaire de contenu, CMS (1), configuré avec des activités qui peuvent être effectuées par les utilisateurs par le biais d'un ou plusieurs ordinateurs clients, connectés à distance au moyen du protocole TCP/IP aux serveurs, à travers le réseau de communication ;
   - un ou plusieurs services web secondaires de tiers (5) connectés audit CMS (1) via Internet, et configurés avec des activités qui peuvent être effectuées par les utilisateurs en dehors du CMS (1) par le biais d'un ou plusieurs ordinateurs clients, connectés à distance au moyen du protocole TCP/IP aux serveurs, à travers le réseau de communication ;
   dans lequel le CMS (1) est configuré avec une base de données (8) pour enregistrer :

      - au moins un enregistrement d'activité d'utilisateurs principal (2) associé aux activités effectuées par lesdits utilisateurs dans le CMS (1), et
      - au moins un ou plusieurs enregistrements d'activité d'utilisateurs secondaires (6, 6') associés aux activités effectuées par des utilisateurs en dehors du CMS (1) par l'intermédiaire desdits services web secondaires de tiers (5) ;

   dans lequel les services web secondaires de tiers sont la propriété de différentes entités qui n'en partagent pas ouvertement l'accès et
   dans lequel la réalisation des activités est enregistrée sous la forme d'un ensemble de valeurs de score ;

      - une plateforme web d'évaluation des utilisateurs (7), communiquée avec le CMS (1) et avec les différents services web secondaires de tiers (5), et équipée d'un ou plusieurs services web pour enregistrer et vectoriser l'activité des utilisateurs dans ledit CMS (1) et dans lesdits services web secondaires de tiers (5), par le biais d'une ou plusieurs API communiquant le CMS (1) avec les services web secondaires de tiers mentionnés (5) au moyen d'un protocole TCP/IP ; et
      - un module de calcul (9) configuré pour effectuer des opérations mathématiques sur les enregistrements d'activité des utilisateurs (2, 6, 6') du CMS (1) et des services web secondaires de tiers (5) capturés par la plateforme web d'évaluation (7), pour deux utilisateurs ou plus du CMS (1) ;

   ledit procédé comprenant effectuer au moins les étapes suivantes :

      - transférer l'ensemble des enregistrements d'activité des utilisateurs (2, 6, 6') associés aux activités des utilisateurs à partir du CMS (1) et des services web secondaires de tiers (5) via une connexion au réseau de communication au moyen du protocole TCP/IP vers la plateforme web d'évaluation (7), en associant au moins un enregistrement d'activité d'utilisateurs (2, 6, 6') à un utilisateur ;
      - traiter dans le serveur hébergeant le CMS (1) les informations transférées à la plateforme web d'évaluation (7), vectoriser et compter le nombre d'activités d'un type donné réalisées par un utilisateur ;
- traiter le module de calcul (9), dans le serveur hébergeant le CMS (1), les informations obtenues à l'étape précédente, en calculant la similitude entre au moins deux des vecteurs obtenus étant calculés, dans lequel le calcul de la similitude comprend appliquer une métrique de Bray-Curtis à un utilisateur i et à un utilisateur i' sur un nombre N d'activités, selon la formule suivante :

$$b_{ii'} = 1 - \frac{\sum_{j=1}^{N} |n_{ij} - n_{i'j}|}{n_{i+} + n_{i'+}}$$

où $n_{ij}$ est le nombre de fois où l'utilisateur i effectue une activité j, et où $n_{i+}$ est le nombre total d'activités effectuées par ledit utilisateur i, et en calculant le nombre d'utilisateurs dont la similitude dépasse une valeur seuil de similitude donnée ;
- enregistrer les valeurs de similitude obtenues à l'étape précédente dans la base de données (8), lesdites valeurs étant associées à l'enregistrement d'activité d'utilisateurs principal (2) généré dans le CMS (1) et à l'au moins un ou plusieurs enregistrements d'activité d'utilisateurs secondaires (6, 6') générés dans les services web secondaires de tiers (5) ; et
- transmettre les informations enregistrées à l'étape précédente par l'intermédiaire du réseau de communication à un ou plusieurs ordinateurs clients au moyen du protocole TCP/IP, les informations de similitude calculées et les enregistrements d'activité des utilisateurs (2, 6, 6') obtenus par les utilisateurs dans le cadre de leurs activités étant envoyés à un module d'affichage (10) desdits ordinateurs clients, ledit module d'affichage (10) étant configuré avec une ou plusieurs interfaces d'utilisateur (4, 11).

2. Procédé selon la revendication précédente, dans lequel le calcul de similitude comprend en outre l'application d'une ou de plusieurs des métriques suivantes : distance euclidienne, distance euclidienne au carré, coefficient de corrélation de Pearson, coefficient de corrélation de rang de Spearman.

3. Procédé selon l'une quelconque des revendications 1 à 2, dans lequel les opérations effectuées par le module de calcul (9) du système comprennent l'établissement d'une valeur pour chaque utilisateur qui détermine la confiance du système dans l'estimation effectuée, dans lequel ladite valeur de confiance est calculée selon l'une ou plusieurs des procédés suivants :

a) « S » étant la valeur de similitude dans l'intervalle où la valeur celle-ci est la plus élevée, la confiance dans l'estimation (C) est directement C=S ;
b) « S » étant la valeur de similitude dans l'intervalle où la valeur de celle-ci est la plus élevée, et « SumS » étant la somme des valeurs de similitude dans tous les intervalles considérés, la confiance dans l'estimation est le quotient C=S/SumS ;
c) « P » étant le nombre d'étudiants des cours précédents dans un intervalle de notes donnée dont la similitude est supérieure à un seuil, et « N » étant le nombre total d'étudiants des cours précédents, la confiance dans l'estimation est déterminée par le quotient C=P/N ;
d) « P » étant le nombre d'étudiants des cours précédents dans un intervalle de notes donnée dont la similitude est supérieure à un seuil, et « N » étant le nombre total d'étudiants des cours précédents dépassant la valeur seuil de similitude dans tous les intervalles considérés, la confiance dans l'estimation est déterminée par le quotient C=P/N.

4. Procédé selon l'une quelconque des revendications 1 à 3, dans lequel les résultats de similitude obtenus comprennent un ou plusieurs niveaux de regroupement d'utilisateurs et/ou calculent et stockent deux ou plusieurs métriques d'évaluation, de sorte que l'utilisateur peut sélectionner différents affichages générés par différents graphiques associés auxdites métriques.

5. Procédé selon l'une quelconque des revendications 1 à 4, dans lequel le calcul de similitude effectué par le module de calcul (9) comprend en outre le calcul du nombre d'utilisateurs dont la similitude dépasse une valeur seuil donnée.

6. Procédé selon l'une quelconque des revendications 1 à 5, comprenant en outre les étapes suivantes :

- afficher pour chaque utilisateur, dans le module d'affichage (10), un diagramme de dispersion avec les valeurs de score associées à la réalisation d'activités dans le CMS (1) et la valeur de similitude ; et
- fixer un seuil de réussite/échec dans le diagramme de dispersion.

**FIG. 1**

Score for practical activities

**FIG. 2**

**FIG. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140122595 A1

**Non-patent literature cited in the description**

- **L. DE LA FUENTE VALENTIN et al.** A visual analytics method for score estimation in learning courses. *Journal of Universal Computer Science,* 2015, vol. 21 (1), 134-155
- **L. DE LA FUENTE VALENTIN et al.** A4Learning: a case study to improve the user performance: Alumni Alike Activity Analytics to Self-Assess Personal Progress. *IEEE 14th International Conference on Advanced Learning Technologies,* 2014

- **L. DE LA FUENTE VALENTIN ; D. BURGOS.** Am I doing well? A4Learning as a self-awareness tool to integrate in Learning Management Systems. *Campus Virtuales,* 2015, vol. 3 (1), 32-40